# EUROPEAN PATENT APPLICATION

(11) **EP 0 764 830 A1**
(43) Date of publication of application: **26.03.1997**
(21) Application number: 96115238.6
(22) Date of filing: 23.09.1996
(51) Int. Cl.: G01D 5/165, H01C 10/30

(54) **A silk-screen-printed electric circuit particularly for a measuring instrument**

(30) Priority: 25.09.1995 IT TO950759
(71) Applicant: MAGNETI MARELLI S.p.A., 20145 Milano (IT)
(72) Inventor: Ramaioli, Francesco, 27100 Pavia (IT)
(74) Representative: Gerbino, Angelo

(57) **Abstract**

The electric circuit (14) is silk-screen printed onto a substrate plate (24) and is intended for use in a measuring instrument such as, for example, an indicator of the level of fuel (18) for a motor vehicle. The circuit (14) has a first region (26) comprising a plurality of elongate conductive elements (28) arranged side by side and interconnected by resistive elements. Each conductive element (28) is electrically connected to each immediately adjacent conductive element (28) at at least two separate points, by means of respective resistive elements made of resistive paste of the same type.

## Description

The present invention relates to an electric circuit silk-screen printed onto a substrate plate, particularly for a measuring instrument such as, for example, an indicator of the level of fuel for a motor vehicle.

More precisely, the circuit has a first region comprising a plurality of elongate conductive elements arranged side by side and interconnected by resistive elements.

The object of the present invention is to provide a silk-screen-printed circuit of the type indicated above the production of which is simplified and cheap and which, at the same time, ensures the desired technical performance.

This object is achieved by means of a circuit of the type indicated above, characterized in that each conductive element is electrically connected to each immediately adjacent conductive element at at least two separate points, by means of respective resistive elements made of resistive paste of the same type.

The use of only one type of resistive paste considerably reduces the time required to produce the circuit in comparison with the situation in which various pastes are used, each in fact having to be applied and dried separately.

In the circuit of the invention, each of the conductive elements of the first region preferably has a first portion, and a second portion which is narrower than the first portion so that the conductive elements are closer together in the regions of the first portion , the conductive elements being interconnected in parallel in the regions of the first and second portions by first and second layers of resistive paste.

The final calibration of the resistive layers, which is carried out by the removal, for example, by means of a laser or sand, of a portion of the resistive paste which has previously been applied in excess, can thus advantageously be carried out only on the resistive layer which connects the second, farther-apart portions of the conductive elements.

Thus, even if a resistive bridge connecting two adjacent conductive elements is completely removed by mistake during the calibration operation, the connection between the two conductive elements is nevertheless ensured by the resistive layer which connects the first, closer-together portions of the conductive elements.

It is thus no longer necessary to check the finished circuit visually and the duration of the production cycle is consequently reduced.

Moreover, the distance between the first portions of the conductive elements, where it is not necessary to carry out any operations to remove paste of the resistive connecting layer, may be very short and its minimum value is determined solely by the limitations of the definition of the silk-screen-printing process. The amount of resistive paste used to form the connection can thus be correspondingly reduced with a saving of approximately half by comparison to conventional techniques.

A further subject of the present invention is a measuring instrument, particularly an indicator of the level of fuel for a motor vehicle, comprising an electric circuit of the type described above.

Further advantages and characteristics of the present invention will become clear from the following detailed description given by way of non-limiting example with reference to the appended drawings, in which:
Figure 1 is a schematic view of the components of a measuring instrument comprising an electric circuit formed according to the invention,
Figure 2 is a plan view of the circuit forming part of the instrument of Figure 1, and
Figure 3 is a plan view of a portion of the circuit of Figure 2, on an enlarged scale.

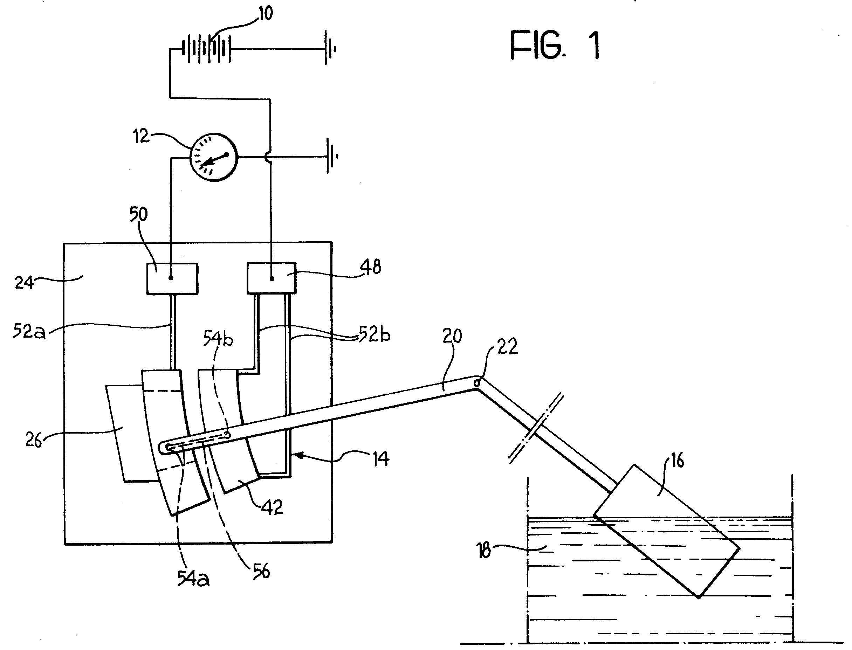

A measuring instrument such as a fuel-level indicator for a motor vehicle comprises (Figure 1) an electric supply 10, a visual level indicator 12, an electric circuit 14, an element 16 which can float in the fuel 18 the level of which is to be measured, and a rod 20 for supporting the floating element 16, the rod 20 being pivoted in its central portion 22.

By virtue of its own characteristics, the circuit 14 which is connected to the electric supply 10, to the visual indicator 12 and to the rod 20 can convert the various positions adopted by the floating element 16 in dependence in variations in the level of the fuel 18 into corresponding indications provided by the level indicator 12.

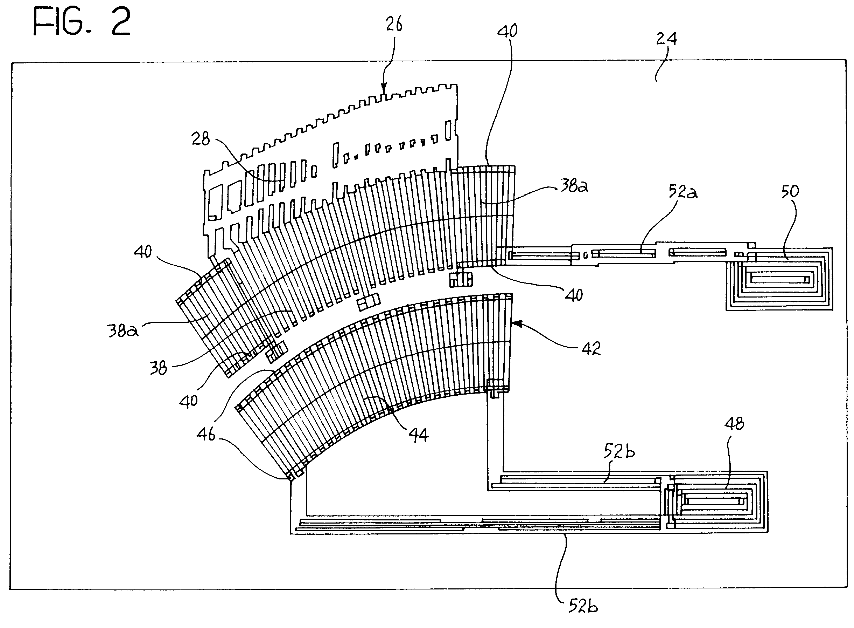

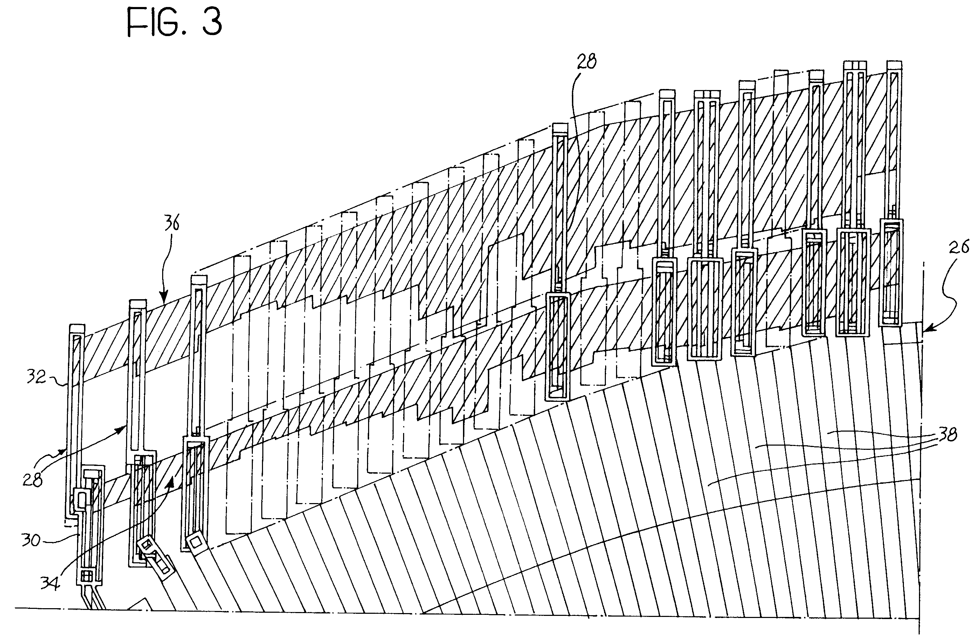

The electric circuit 14 is silk-screen printed onto a substrate plate 24 and has (Figures 2 and 3) a first region 26 comprising a plurality of elongate conductive elements 28 arranged side by side.

Each of the conductive elements of the first region 26 has (Figure 3) a first portion 30 and a second portion 32 which is narrower than the first portion 30 so that the conductive elements 28 are closer together in the region of the first portion 30. The conductive elements 28 are interconnected in parallel in the regions of the first and second portions 30, 32 by first and second layers 34, 36 of resistive paste, respectively.

The conductive elements 28 of the first region 26 also have a respective bar-shaped appendage 38. A respective series of further conductive bars 38a (Figure 2) is located at each of the two ends of the array of appendages 38. The bars 38a are connected at their ends by respective short-circuiting conductors 40.

The circuit 14 also comprises a supply region 42 formed by a plurality of conductive bars 44 arranged side by side and connected at their ends by short-circuiting conductors 46.

The supply region 42 and the first region 26 are connected to respective supply and output nodes 48, 50 by respective conductors 52a, 52b. The nodes 48, 50 are in turn connected to the electrical supply 10 and to the visual level indicator 12, respectively.

The regions 26, 42 are electrically connected (Figure 1) by means of two electrical contacts 54a, 54b carried by the rod 20, interconnected by a conductive track 56 formed on the rod, and slidable on respective regions 26, 42 as a result of pivoting of the rod 20 due to a change in the level of the fuel 18 and consequently of the position of the floating element 16.

The substrate plate 24 is made of electrically non-conductive material, for example, ceramic or vitreous material.

The conductive elements 28, the bars 38, 38a, 44, the nodes 48, 50 and the conductors 52a, 52b of the circuit 14 are silk-screen printed onto the plate 24 with the use of a thick-film technique and are formed by a conductive paste, for example, based on Ag with the addition of Pd. After drying in an oven, they have a thickness of about 10-12 µm.

The first portion 30 of the conductive elements 28 are about 330 µm wide. In the region of the first portion 30 the conductive elements 28 are about 120 µm apart. The second portion 32 of the conductive elements 28 are about 250 µm wide. In the region of the second portion 32, the conductive elements 28 are about 200 µm apart.

The bar-like appendages 28 and the bars 38a, 44 are about 200-300 µm wide.

The resistive layers 34, 36 are silk-screen printed onto the plate 24 by a thick-film technique with the use of the same type of paste, for example, containing oxides of Ru, Ir, Bi, Au, Pt and Pd. Their thickness after oven-drying is about 10-12 µm.

During the process for the production of the circuit of the invention, the conductive elements 28, which have previously been silk-screen printed onto the plate 24, are then connected in parallel in the regions of the first and second portions 30, 32, respectively, by the silk-screen printing of the layers 34, 36 of resistive paste. These layers 34, 36 form connecting bridges having slightly greater conductivities than those desired in the spaces between adjacent conductive elements 28. The excess paste is then removed, by known techniques, for example, with sand or a laser, from the resistive layers 36 which connect the second portions 32 of the conductive elements 28 until the conductivity is reduced to the desired value.

This removal operation enables the electric circuit 14 to be calibrated so as to achieve the desired electrical parameters even though only one type of resistive paste is used.

The resistive layer 34 which connects the first portions 30 of the conductive elements 28, however, is not affected by the removal operation. The layer 34 thus ensures that the conductive elements 28 are connected even if a bridge of the resistive layer 36 between adjacent conductive elements 28 is completely removed by mistake during the preceding removal stage.

The first portions 30 of the conductive elements 28 can thus be formed very close together since no operation to remove resistive paste has to take place between them and the quantity of paste which it is necessary to use is consequently reduced.

Naturally, the principle of the invention remaining the same, the details of construction and forms of embodiment may be varied widely with respect to those described and illustrated in the drawings, without thereby departing from the scope of the present invention. For example, the functions of the nodes 48, 50 may be reversed in order to conform to the specifications of various vehicle manufacturers and the supply region 42 may be eliminated by the direct connection to the electric supply 10 of a contact carried by the rod 20 and slidable on the first region 26.

## Claims

1. An electric circuit (14) silk-screen printed onto a substrate plate (24), particularly for a measuring instrument such as, for example, an indicator of the level of fuel (18) for a motor vehicle, the circuit (14) having a first region (26) comprising a plurality of elongate conductive elements (28) arranged side by side and interconnected by resistive elements,
the circuit being characterized in that each conductive element (28) is electrically connected to each immediately adjacent conductive element (28) at at least two separate points, by means of respective resistive elements made of resistive paste of the same type.

2. A circuit (14) according to Claim 1, characterized in that each of the conductive elements (28) of the first region (26) has a first portion (30) and a second portion (32) which is narrower than the first portion (30) so that the conductive elements (28) are closer together in the regions of the first portions (30), the conductive elements (28) being interconnected in parallel in the regions of the first and second portions (30, 32) by first and second layers (34, 36) of resistive paste.

3. A circuit (14) according to Claim 2, characterized in that the conductive elements (28) of the first region (26) have a respective bar-shaped appendage (38), respective series of further conductive bars (38a) being located at the ends of the array of appendages (38) and the further bars (38a) of each series being connected at their ends by respective short-circuiting conductors (40).

4. A circuit (14) according to any one of the preceding claims, characterized in that it comprises a supply region (42) formed by a plurality of bars (44) disposed side by side and connected at their ends by short-circuiting conductors (46).

5. A measuring instrument, particularly an indicator of the level of the fuel (18) for a motor vehicle, comprising an electric circuit (14) according to any one of the preceding claims.
